# EUROPÄISCHE PATENTSCHRIFT

(11) **EP 2 855 059 B1**
(45) Veröffentlichungstag und Bekanntmachung des Hinweises auf die Patenterteilung: **08.04.2020**
(21) Anmeldenummer: 13728687.8
(22) Anmeldetag: 29.05.2013
(51) Int. Cl.: B23B 31/02, B23B 31/16, B23B 51/10, B23C 3/05, B23D 77/00

(54) **MODULARER WERKZEUGHALTER**
MODULAR TOOL HOLDER
PORTE-OUTIL MODULAIRE

(30) Priorität: 01.06.2012 DE 102012209312
(43) Veröffentlichungstag der Anmeldung: 08.04.2015
(73) Patentinhaber: Gühring KG, 72458 Albstadt (DE)
(72) Erfinder: TEUSCH, Bruno, 73733 Esslingen (DE)
(74) Vertreter: Winter, Brandl, Fürniss, Hübner, Röss, Kaiser, Polte - Partnerschaft mbB
(86) Internationale Anmeldenummer: PCT/EP2013/061070
(87) Internationale Veröffentlichungsnummer: WO 2013/178681

(56) Entgegenhaltungen:
- EP-A2- 1 013 368
- WO-A1-2011/121139
- DE-A1- 10 239 270
- DE-U1- 8 814 843
- US-A- 4 708 546

## Beschreibung

Die Erfindung betrifft einen modularen Werkzeughalter gemäß dem Oberbegriff des Anspruchs 1.

Derartige Werkzeughalter werden zur Vor- und/oder Endbearbeitung verschiedener Funktionsflächen an einem Werkstück - gegebenenfalls mit unterschiedlicher Oberflächengüte - in einem Arbeitsgang bzw. mit ein und derselben Einspannung in einer Werkzeugmaschine eingesetzt. Dabei soll die Lagezuordnung der bearbeiteten Funktionsflächen am Werkstück in einem engen Toleranzbereich liegen. Ein derartiger Werkzeughalter bildet mit einem eingespannten Schneidwerkzeug ein Schaftwerkzeug in Form eines Stufen- oder Fertigbearbeitungswerkzeug, wie es beispielsweise bei der Komplettbearbeitung von Zylinderköpfen benötigt wird, um beispielsweise die Grundsitzbohrung mit den entsprechend angepassten Durchmessern für das Einlass- bzw. Auslassventil oder die Vor- und/oder Fertigbearbeitung des Ventilsitzes durchzuführen, wobei in einem Arbeitsgang die Ventilführungs- und die Ventilsitzbohrung hergestellt werden soll. Die im Bereich des Ventilsitzes auszubildenden mehrfachen Funktionsflächen sind nicht nur hinsichtlich ihrer Winkellage, sondern auch bezüglich ihrer Axialposition mit einem sehr engen Toleranzfeld belegt. Es besteht demnach das Bedürfnis nach einem Werkzeughalter, der einen extrem stabilen und exakten Rundlauf eines eingespannten Schneidwerkzeugs garantiert.

Die DE 10 2006 016 290 A1 zeigt und beschreibt ein mehrteiliges Schaftwerkzeug zur spanabhebenden Bearbeitung eines ersten, im Durchmesser kleineren Bereichs, wie zum Beispiel einer auf Präzision zu bearbeitenden Ventilführungsbohrung, und eines zweiten, im Durchmesser größeren Bereichs, wie zum Beispiel einer Ventilsitzfläche. Zu diesem Zweck weist das Schaftwerkzeug einen Werkzeughalter mit einem Grundkörper, der sich funktional in einen Schaftabschnitt und einen Spannabschnitt unterteilen lässt, sowie einem am Grundkörper lösbar befestigten Schneidkopf auf. Über den Schaftabschnitt wird der Werkzeughalter an eine Werkzeugmaschinenspindel angekoppelt, während im Spannabschnitt über einen Hydrodehnspannmechanismus der Werkzeugschaft eines Schneidwerkzeugs, z.B. einer Mehrschneidenreibahle, eingespannt wird. Der Schneidkopf sitzt auf einer zylindrischen Fügefläche des Spannabschnitts und wird bei einer Betätigung des Hydrodehnspannmechanismus synchron mit dem zentrisch angeordneten Schneidwerkzeug gespannt. Der Schneidkopf weist weitere Schneidkanten auf. Der Werkzeughalter trägt damit einerseits das zentrisch angeordnete Schneidwerkzeug für die Bearbeitung des ersten Bereichs und andererseits den konzentrisch zum Schneidwerkzeug angeordneten Schneidkopf mit weiteren Schneidkanten, die in einer vorbestimmten axialen und/oder radialen und/oder Winkellage zu den Schneiden des zentrisch angeordneten Schneidwerkzeugs angeordnet sind.

Die DE 88 14 843 U1 offenbart ein modularer Werkzeughalter gemäß dem Oberbegriff des Anspruchs 1.

Die Anforderungen, die an derartige Werkzeughalter oder derartige mehrstufigen Schaftwerkzeuge gestellt werden, werden in mehrfacher Hinsicht höher. Zum Einen verlangen die Abnehmer solcher Werkzeughalter und Schaftwerkzeuge immer höhere Fertigungsgenauigkeiten, insbesondere immer engere Fluchtungs- und/oder Rundlaufgenauigkeiten. Zum Anderen werden zunehmend schwerer zerspanbare Werkstoffe eingesetzt, so dass die Anforderungen an die Stabilität derartiger Werkzeughalter und Schaftwerkzeuge ebenfalls steigen. Schließlich wird ein Werkzeughalter und Schaftwerkzeug verlangt, das einfach handhabbar ist und flexibel eingesetzt werden kann.

Der Erfindung liegt deshalb die Aufgabe zu Grunde, einen modularen Werkzeughalter für ein mehrstufiges Schaftwerkzeug der vorstehend beschriebenen Art sowie ein entsprechendes Schaftwerkzeug zu schaffen, das den vorstehend angesprochenen Kriterien gleichzeitig in einer bisher nicht erreichten Form gerecht wird.

Diese Aufgabe wird durch einen Werkzeughalter mit den Merkmalen des Anspruchs 1 gelöst. Vorteilhafte oder bevorzugte Weiterbildungen sind Gegenstand abhängiger Ansprüche.

Erfindungsgemäß wird ein modularer Werkzeughalter für ein als Feinbearbeitungs-, Stufen- oder Fertigbearbeitungswerkzeug einsetzbares, mehrstufiges Schaftwerkzeug geschaffen, bei dem ein zentrisch zu spannendes Schneidwerkzeug, beispielweise ein Bohrer, ein Fräser oder eine Reibahle, zur spanabhebenden Bearbeitung eines ersten, im Durchmesser kleineren Bereichs sowie ein separater, hülsenartiger Schneidkopf, beispielsweise ein mit einer Vielzahl von auswechselbar befestigten Schneidplatten, zur Bearbeitung eines zweiten, im Durchmesser größeren Bereichs zueinander konzentrisch gespannt werden.

Der Werkzeughalter weist hierzu zunächst einen sich entlang einer Drehachse erstreckenden, im Wesentlichen rotationssymmetrisch ausgebildeten Grundkörper auf. Der Grundkörper lässt sich funktional in einen Schaftabschnitt zum (unmittelbaren oder mittelbaren) Ankoppeln des Werkzeughalters an eine Werkzeugmaschinenspindel und einen Spannabschnitt zum Aufnehmen und Spannen des Werkzeugschafts eines zu spannenden Schneidwerkzeugs unterteilen. Der Schaftabschnitt des Grundkörpers kann hierzu in der Art eines an sich bekannten HSK (Hohlschaftkegel)-, SK (Steilkegel)-, MK (Morsekegel)- oder Zylinder-Schafts ausgebildet sein. Der Spannabschnitt des Grundkörpers, der sich in axialer Richtung an den Schaftabschnitt anschließt, weist eine werkzeugseitig offene, zentrische Aufnahmebohrung zur Aufnahme des Werkzeugschafts eines zu spannenden Schneidwerkzeugs auf. Die Spannung des Werkzeugschafts kann z.B. durch einen an sich bekannten Hydrodehnspannmechanismus erfolgen.

Der hülsenartige Schneidkopf ist konzentrisch zum Grundkörper bzw. einem vom Grundkörper gehaltenen Schneidwerkzeug angeordnet und am Grundkörper lösbar befestigt. Erfindungsgemäß hat der Schneidkopf einen den Grundkörper bzw. Werkzeughalter verlängernden Hülsenabschnitt mit einer konzentrisch zur zentrischen Aufnahmebohrung des Spannabschnitts angeordneten zentrischen Durchgangsbohrung, in der der aus dem Spannabschnitt kragende Werkzeugschaftteil eines im Grundkörper eingespannten Schneidwerkzeugs mit einem definierten seitlichen Spiel aufgenommen und radial abgestützt ist.

Weil der Hülsenabschnitt, der den aus dem Spannabschnitt kragenden Werkzeugschafteil umschließt und radial stützt, in Werkzeugvorschubrichtung vor dem Spannabschnitt bzw. Grundkörper liegt, wird eine radiale Abstützung in einem axialen Abstand zu der durch den Spannabschnitt vorgesehenen Einspannstelle bewirkt. Je nach Länge des Schneidkopfs kann der axiale Abstand zum Spannabschnitt größer oder kleiner gewählt werden.

Durch den Hülsenabschnitt, der - in Werkzeugvorschubrichtung betrachtet - dem Spannabschnitt vorgeschaltet ist, erhält der aus dem Spannabschnitt kragende Werkzeugschaftteil eine radiale Abstützung, die zu einer Verringerung von fliehkraft- oder einspannbedingten Abweichungen der Längsachse des Schneidwerkzeugs von der Drehachse des Werkzeughalters beiträgt und damit Rundlauffehler verringert. Entscheidend ist hierfür lediglich, dass die Durchgangsbohrung des Hülsenabschnitts konzentrisch zur, d.h. in axialer Flucht mit der, zentrischen Aufnahmebohrung des Spannabschnitts verläuft. Diesbezüglich genügt es, wenn die zentrische Durchgangsbohrung lediglich über einen bestimmten Längenabschnitt hinweg einen mit einer definierten Spielpassung gefertigten Innendurchmesser aufweist. Selbstverständlich kann die zentrischen Durchgangsbohrung über ihre gesamte Länge hinweg einen mit einer definierten Spielpassung gefertigten Innendurchmesser haben. Form- und/oder einspannbedingte Lageabweichungen zwischen der Längsachse des Schneidwerkzeugs und der Drehachse des Werkzeughalters sowie fliehkraftbedingte Auslenkungen des Schneidwerkzeugs lassen sich erheblich verringern oder gar ausschließen, wenn der Innendurchmesser der zentrischen Durchgangsbohrung in einem eng tolerierten Toleranzfeld liegt.

Um eine möglichst hohe Koaxialität der zentrischen Durchgangsbohrung im Hülsenabschnitt mit der Drehachse des Werkzeughalters und damit eine möglichst hohe Konzentrizität der zentrischen Durchgangsbohrung im Hülsenabschnitt zur Aufnahmebohrung im Spannabschnitt, d. h. eine definierte Spielpassung, zu erhalten, kann der für die radiale Abstützung maßgebliche Innendurchmesserbereich der Durchgangsbohrung des Hülsenabschnitts in einem Zustand, in dem der Schneidkopf am Grundkörper befestigt ist, z.B. mittels eines geeigneten Reib- oder Schleifwerkzeugs, auf das für die definierte Spielpassung erforderliche Toleranzmaß bearbeitet werden.

Erfindungsgemäß weist der Schneidkopf in einem axialen Abstand zum Spannabschnitt, im Besonderen an seinem vom Spannabschnitt abgewandten, freien Endabschnitt, darüber hinaus eine Feinjustiereinrichtung auf, die innerhalb des zur Verfügung stehenden seitlichen Spiels oder Toleranzfeldes eine Feinjustierung oder Korrektur der radialen Lage des aus dem Spannabschnitt kragenden Werkzeugschaftteils gestattet. Über die Feinjustiereinrichtung lässt sich daher ein beispielsweise form- oder einspannbedingter Anordnungsfehler, der eine Abweichung der Längsachse des Schneidwerkzeugs von der Drehachse des Werkzeughalters verursachen könnte, soweit korrigieren, dass eine für die geforderte hohe Rundlaufgenauigkeit möglichst genaue Konzentrizität zwischen dem aus dem Spannabschnitt kragenden Werkzeugschaftteil des Schneidwerkzeugs und der auf dem Schneidkopf vorgesehenen Schneidkante(n) erhalten wird.

In einer konstruktiv einfach zu realisierenden und ohne größeren Aufwand zu bedienenden Ausführung weist die Feinjustiereinrichtung eine Vielzahl von um die Drehachse der Werkzeughalters herum äquidistant angeordneten Stellschrauben auf, die jeweils am Hülsenabschnitt abgestützt sind und radial gegen den aus dem aus dem Spannabschnitt kragenden Werkzeugschafteil drücken. Bei den Stellschrauben kann es sich beispielsweise um Madenschrauben mit Innensechskant handeln, die jeweils in einer die Hülsenwand des Hülsenabschnitts durchdringenden Gewindebohrung eingeschraubt sind und mit ihrem Kopf radial gegen den aus dem Spannabschnitt kragenden Werkzeugschaftteil drücken. Durch die äquidistante Verteilung der Stellschrauben lassen sich ungleiche Massenverteilungen und dadurch bedingte Unwuchten gering halten. Zudem wird ein manueller, einfach zu bewältigender Unwuchtausgleich ermöglicht, ohne dass hierfür vom Werkzeughalter Auswuchtmassen entfernt, z.B. eine oder mehrere Auswuchtbohrungen oder dergleichen vorgesehen, oder am Werkzeughalter Auswuchtmassen, z.B. Auswuchtgewichte, angebracht werden müssen.

Diesbezüglich kann es von Vorteil sein, wenn der Schneidkopf in Richtung der Drehachse zum Schneidwerkzeug hin im Außendurchmesser stufenartig verjüngt ist. Der freie Endabschnitt des Hülsenabschnitts, an dem die Feinjustiereinrichtung positioniert ist, bildet dann einen im Durchmesser verringerten Endabschnitt des Hülsenabschnitts. Es lassen sich dadurch tiefere Bohrungen durch die Hülsenwand des Hülsenabschnitts hindurch und dadurch bedingte Unwuchten vermeiden. Des Weiteren kann der im Durchmesser größere, gegenüberliegende Endabschnitt des Schneidkopfs vorteilhaft zur Befestigung des Schneidkopfs am Grundkörper herangezogen werden, während in einem mittleren Abschnitt des Schneidkopfs die wenigstens eine Schneidkante, z. B. in Form einer oder mehrere lösbar montierter Wechsel- oder Wendeschneidplatte, angeordnet sein kann.

Die Befestigung des Schneidkopfs am Grundkörper kann durch Verschraubung erfolgen. Hierzu kann der Schneidkopf über eine an seinem dem Grundkörper zugewandten Endabschnitt vorgesehene Stirnfläche axial an einer gegenüberliegenden Stirnfläche des Grundkörpers abgestützt sein. Die gegenüberliegenden Stirnflächen am Schneidkopf und Grundkörper können in fertigungstechnischer Hinsicht vorteilhaft jeweils als plane, in einer radialen Ebene liegende Ringflächen ausgebildet sein. Eine besonders stabile Verbindung zwischen Schneidkopf und Grundkörper gelingt dann, wenn der Schneidkopf mit dem Werkzeughalter durch eine Vielzahl von äquidistant um die Drehachse des Werkzeughalters herum verteilten Spannschrauben axial verschraubt ist. Die Spannschrauben können beispielsweise jeweils durch eine Bohrung an einem im Durchmesser vergrößerten Ringflansch des Schneidkopfs hindurch geführt und in eine gegenüberliegende Gewindebohrung am Grundkörper eingeschraubt sein. Der Schneidkopf lässt sich auf diese Weise mit dem Grundkörper zu einem einstückig handhabbaren mehrstufigen Werkzeughalter verbinden.

Alternativ oder zusätzlich zur Verschraubung kann der Schneidkopf nach dem Vorbild des z.B. in der DE 10 2006 016 290 A1 beschriebenen Konzepts über einen Hydrodehnspannmechanismus am Grundkörper befestigt sein, sofern der Schneidkopf - in axialer Richtung betrachtet - radial außerhalb des Spannbereichs des Hydrodehnspannmechanismus auf dem Spannabschnitt sitzt. In diesem Fall lassen sich über den Hydrodehnspannmechanismus bei einer Druckbeaufschlagung einer Druckkammer des Hydrodehnspannmechanismus radial nach innen das Schneidwerkzeug, das in der zentrischen Aufnahmebohrung aufgenommen ist, und gleichzeitig radial nach außen der Schneidkopf, der radial außerhalb auf dem die zentrische Aufnahmebohrung umgebenden Spannbereich des Spannabschnitts sitzt, mit dem Grundkörper synchron zu einem einstückig handhabbaren mehrstufigen Schaftwerkzeug verspannen.

Im Besonderen wird durch eine Gestaltung, die sich an der durch die DE 10 2006 016 290 A1 vermittelte technischen Lehre orientiert, eine synchrone Spannung des Schneidwerkzeugs und des Schneidkopfs mit dem Werkzeughalter in der Weise ermöglicht, dass sich beim Spannen des Hydrodehnspannmechanismus die Schneidkante(n) am Schneidwerkzeug und/oder Schneidkopf relativ zur Drehachse maximal um ein Maß verlagern, welches innerhalb eines vorgegebenen Toleranzfeldes oder eines Bereichs liegt, der ggf. durch eine zusätzliche, an sich bekannte Feinjustierung korrigierbar ist.

Weil nach dem Vorbild der technischen Lehre der DE 10 2006 016 290 A1 der das Schneidwerkzeug spannende Werkzeughalter mit dem Schneidkopf, der auf dem die zentrische Aufnahmebohrung umgebenden Längenbereich des Spannabschnitt sitzt, zu einer einstückig handhabbaren Einheit in der Weise zusammenstellbar ist, dass beim Spannvorgang des Schneidwerkzeugs die Dehnung bzw. elastische Verformung des Schneidkopfs in vorbestimmten, sehr engen Grenzen bleibt, wird die Spannkraft des Hydrodehnspannmechanismus auf das Zentrum, d.h. auf das Schneidwerkzeug konzentriert. Damit ist sichergestellt, dass das Schneidwerkzeug mit dem radial weiter außen auf dem Spannabschnitt angeordneten Schneidkopf mit größter Rundlaufgenauigkeit ausgerichtet werden kann.

Gleichzeitig wird die Spannkraft für das Schneidwerkzeug erhöht, so dass der Hydrodehnspannmechanismus über eine größere axiale Länge trägt, was für den Rundlauf zwischen dem Schneidwerkzeug und dem Schneidkopf weiter förderlich ist. Aufgrund desselben Effekts ist auch sichergestellt, dass sich beim Spannen des Schneidwerkzeugs die Schneidkante(n) des Schneidkopfs nicht weiter als um ein zulässiges Maß verschieben, welches entweder bereits innerhalb des vorgegebenen engen Toleranzbereichs oder aber innerhalb eines Bereichs liegt, der durch eine Feinjustierung der Schneiden korrigiert werden kann. Dadurch ist die Voraussetzung dafür geschaffen, dass das Schneidwerkzeug und/oder der Schneidkopf mit einfachen Handgriffen ausgewechselt werden können/kann, so dass sich in Verbindung mit der Zusammenstellung des Werkzeughalters mit dem Hydrodehnspannmechanismus und dem auf dem Spannabschnitt angeordneten Schneidkopf ein modularer, flexibel veränderbarer Aufbau ergibt.

Hinsichtlich der Schneidkante(n) des Schneidwerkzeugs gestattet zunächst einmal die am freien Endabschnitt des Hülsenabschnitts des Schneidkopfs vorgesehene Feinjustiereinrichtung eine Begrenzung eines radialen Achsversatzes des Schneidwerkzeugs gegenüber der Drehachse. Unabhängig davon können/kann der Schneidkopf und/oder das Schneidwerkzeug jeweils zumindest eine Schneidkante aufweisen, die in ihrer axialen, radialen und/oder Winkellage relativ zur Drehachse des Werkzeughalters feinjustierbar ist.

Die zumindest eine Schneidkante kann jeweils an einer am Schneidwerkzeug bzw. Schneidkopf lösbar montierten (Wechsel- oder Wende-)Schneidplatte ausgebildet sein, die wiederum auf einer Kassette angeordnet sein kann, die unmittelbar oder mittelbar feinjustierbar am Schneidwerkzeug bzw. Schneidkopf angeordnet sein kann. Hinsichtlich der mittelbaren Anordnung kann die jeweilige Schneidplatte auf einer Kassette befestigt sein, die in ihrer axialen und/oder radialen und/oder Winkellage relativ zur Drehachse des Werkzeughalters feinjustierbar ist. Beispielsweise können das Schneidwerkzeug und/oder der Schneidkopf jeweils über Stellschrauben oder Stellkeile verfügen, die mit der jeweiligen Schneidplatte bzw. Kassette zusammenwirken.

Der erfindungsgemäße Werkzeughalter hat ferner vorteilhafterweise eine innenliegende MMS (Minimalmengenschmierung)-taugliche Kühlschmiermittelversorgungseinrichtung. Deren Aufbau und Funktionsweise ist an sich bekannt, so dass es keiner weiteren Erläuterung bedarf.

Es hat sich gezeigt, dass mit dem erfindungsgemäßen Aufbau des Werkzeughalters eine extrem rundlaufgenaue Ausrichtung des Schneidwerkzeugs bzw. der Schneidkante(n) am Schneidwerkzeug und/oder Schneidkopf unter Bereitstellung einer leichten Auswechselbarkeit des Schneidwerkzeugs und/oder Schneidkopfs möglich ist.

Aufgrund des erfindungsgemäßen Aufbaus eignet sich ein aus dem Werkzeughalter und dem Schneidwerkzeug gebildetes Schaftwerkzeug zur Verwendung als ein Stufenbearbeitungswerkzeug, bei dem der Werkzeughalter und der Schneidkopf zeitlich gestaffelt, jedoch mit exakter Relativlagepositionierung der einzelnen Schneidkanten zum Einsatz kommen.

Durch den erfindungsgemäßen Aufbau ergibt sich ferner die Möglichkeit, das Schaftwerkzeug als Modularwerkzeug aufzubauen, bei dem der Grundkörper mit unterschiedlichen Schneidwerkzeugen und/oder Schneidköpfen kombiniert wird, Auf diese Weise ergibt sich ein sehr flexibel einsetzbarer Werkzeughalter bzw. ein sehr flexibel einsetzbares Schaftwerkzeug, mit dem kostengünstig verschiedenste Bearbeitungsaufgaben gelöst werden können.

Nachstehend wird anhand schematischer Zeichnungen eine derzeit bevorzugte Ausführungsform der Erfindung näher erläutert:
Es zeigen:
Fig. 1 eine Seitenansicht eines aus einem Werkzeughalter und einem im Werkzeughalter gespannten Schneidwerkzeug gebildeten, mehrstufigen Schaftwerkzeug;
Fig. 2 eine Längsschnittansicht des Schaftwerkzeugs; und
Fig. 3 eine axiale Draufsicht des Schaftwerkzeugs.

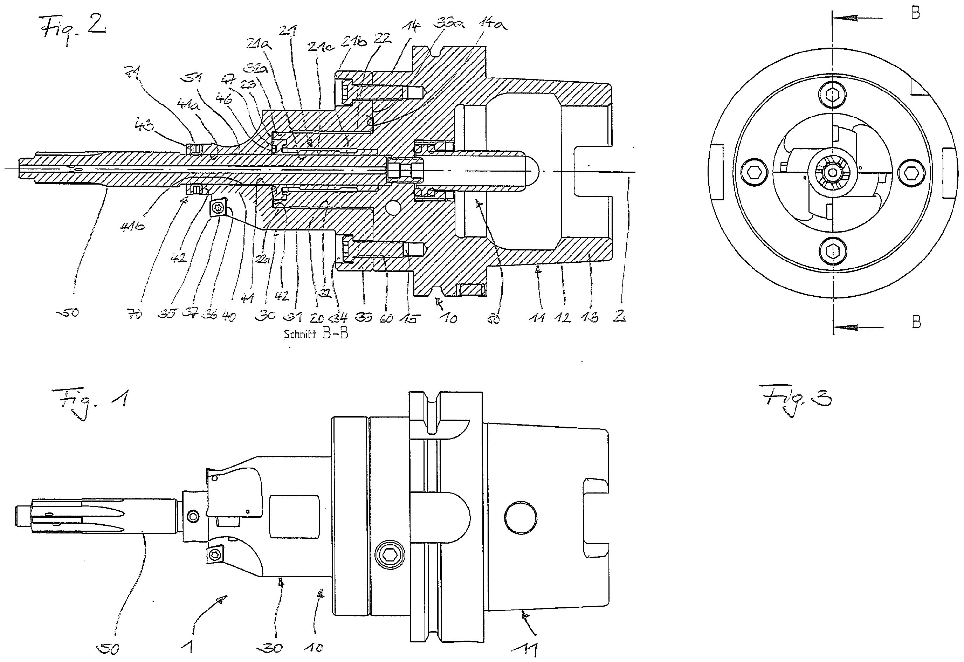

Fig. 1 bis 3 zeigen in schematischer Darstellung ein mehrteiliges Schaftwerkzeug 1 zur spanabhebenden Bearbeitung eines Werkstücks. Bei dem mehrteiligen Schaftwerkzeug 1 handelt es sich um ein Feinbearbeitungswerkzeug, das als Stufenwerkzeug zur Komplettbearbeitung von Bauteilen, wie zum Beispiel von Zylinderköpfen, eingesetzt werden kann. Solche Werkzeuge sind auch unter dem Begriff Fertigbearbeitungswerkzeug bekannt. Das in Fig. 1 bis 3 gezeigte Schaftwerkzeug 1 ist im Wesentlichen aus einem Werkzeughalter 10, einem an diesem lösbar befestigten Schneidkopf 30 und einem im Werkzeughalter 10 zentrisch eingespannten Schneidwerkzeug 50 gebildet.

Bei dem Schneidwerkzeug 50 handelt es sich in der gezeigten Ausführungsform um eine Mehrschneidenreibahle mit sechs äqudistant um die Drehachse 2 herum ausgebildeten Schneidkanten. Alternativ dazu kann das Schneidwerkzeug mit mehreren Wechsel- oder Wendeschneidplatten bestückt sein, an denen die Schneidkanten ausgebildet sind.

Der Werkzeughalter 10 weist einen sich entlang einer Drehachse 2 erstreckenden, im Wesentlichen rotationssymmetrisch gestalteten Grundkörper 11 auf. Der Grundkörper 11 entspricht im Aufbau und in der Funktionsweise einem an sich bekannten Hydrodehnspannfutter. Der Grundkörper 11 ist funktional in einen Schaftabschnitt 12 und einen Spannabschnitt 20 unterteilt, die sich entlang der Drehachse 2 erstrecken.

Der Schaftabschnitt 12 dient zur Ankopplung des Werkzeughalters 10 oder Schaftwerkzeugs 1 an eine (nicht gezeigte) Werkzeugmaschinenspindel oder ein (ebenfalls nicht gezeigtes) Werkzeugmodul eines modular aufgebauten Werkzeugsystems. Der Schaftabschnitt 12 hat hierzu in der gezeigten Ausführungsform einen an sich bekannten HSK (Hohlschaftkegel)-Schaft 13, der aus Fig. 1 und 2 ersichtlich ist.

Der den Schaftabschnitt 12 axial verlängernde Spannabschnitt 20 weist einen an sich bekannten Hydrodehnspannmechanismus 21 (vgl. Fig. 2) mit einer werkzeugseitig offenen, zentrischen Aufnahmebohrung 21a zur Aufnahme des Werkzeugschafts 51 des Schneidwerkzeugs 50 auf. Mit dem Bezugszeichen 21b ist eine Druckkammer bezeichnet, die radial innenseitig unter Zwischenschaltung einer elastisch nachgiebigen Trennwand 21c die zentrische Aufnahmebohrung 21a definiert, die zur Aufnahme eines auf Passung geschliffenen, zylindrischen Werkzeugschafts 51 des Schneidwerkzeugs 50 dient. Die zentrische Aufnahmebohrung 21a ist so gefertigt, dass der Werkzeugschaft 51 mit einer definierten engen Spielpassung aufgenommen werden kann. Die Funktionsweise des Hydrodehnspannmechanismus 21 zur Spannung des Schneidwerkzeugs 50 ist an sich bekannt und bedarf keiner weiteren Erläuterung.

Konzentrisch zur zentrischen Aufnahmebohrung 21a hat der Spannabschnitt 20 außenumfangsseitig eine Außenumfangsfläche 22, die zumindest abschnittsweise, im Besonderen zumindest an einem in Werkzeugvorschubrichtung vorderen Endabschnitt 22a, bezüglich der Drehachse 2 so gefertigt ist, dass eine sehr eng gesetzte Rundlauftoleranz eingehalten wird. Dieser vordere Endabschnitt 22a dient zur radialen Positionierung bzw. konzentrischen Anordnung des später beschriebenen Schneidkopfs 30 auf dem Spannabschnitt 20 des Grundkörpers 11.

Der hülsenartig ausgebildete und in Werkzeugvorschubrichtung im Durchmesser mehrstufig verjüngte Schneidkopf 30 ist auf dem Spannabschnitt 20 des Grundkörpers 11 konzentrisch zu dem im Spannabschnitt 13 gespannten Schneidwerkzeug 50 lösbar angeordnet. Er ist funktional in einen den Spannabschnitt 20 umschließenden Fügeabschnitt 31 und einen den Fügeabschnitt 31 verlängernden, in Werkzeugvorschubrichtung dem Spannabschnitt 13 vorgeschalteten Hülsenabschnitt 40 unterteilt.

Der Schneidkopf 30 ist außenumfangsseitig mit einer Vielzahl von Wende- oder Wechselschneidplatten 35 bestückt, die jeweils in einer taschenartigen Ausnehmung 36 angeordnet und mittels einer Spannschraube 37 lösbar befestigt sind. Die Schneidplatten 35 können auf mehreren Durchmessern angeordnet sein und axial und/oder radial wirkende Schneidkanten haben, die beispielsweise zur Bearbeitung eines Ventilsitzrings bzw. einer dafür vorgesehenen Bohrung im Zylinderkopf dienen. Die Schneidkanten können selbstverständlich auch zur Drehachse unter verschiedenen, genauestens einzuhaltenden Winkeln geneigt sein, was beispielsweise bei der Endbearbeitung von Ventilsitzringen erforderlich ist.

Fig. 1 zeigt im Besonderen, dass die Schneidplatten 35 außenumfangsseitig an einem sich im Durchmesser verjüngenden Längenabschnitt des Hülsenabschnitts 40 und im Besonderen axial zwischen dem vorderen Endabschnitt des Hülsenabschnitts 40 und dem Fügeabschnitt 31 des Schneidkopfs 30 angeordnet sind. Durch diese Anordnung wird eine ungehinderte Zugänglichkeit zu einer später beschriebenen Justiereinrichtung 70 sowie zu ebenfalls später beschriebenen Spannschrauben 60 erreicht.

Alternativ zu der aus Fig. 1 ersichtlichen Anordnung können die am Schneidkopf 30 unmittelbar angeordneten Wechsel- oder Wendeschneidplatten 35 jeweils (in nicht näher gezeigter Weise) in ihrer radialen und/oder axialen und/oder Winkellage zur Drehachse 2 verstellbar angeordnet sein. Weiter können Wechsel- oder Wendeschneidplatten 35 jeweils über eine (nicht gezeigte) Kassette mittelbar am Schneidkopf 30 befestigt sein, die in ihrer axialen und/oder radialen und/oder Winkellage relativ zur Drehachse des Werkzeughalters 10 an diesem feinjustierbar angeordnet ist. Eine Verstellbarkeit der Wechsel- oder Wendeschneidplatten 35 bzw. der Kassette wird beispielsweise mittels einer oder mehrerer am Schneidkofp 30 abgestützer Stellschrauben oder Stellkeile erreicht, die mit der jeweiligen Schneidplatte 35 bzw. Kassette zusammenwirken.

Alternativ zu den oben beschriebenen Konzepten können die Schneidkanten des Schneidkopfs 30 nach dem Vorbild des Schneidwerkzeugs 50 auch unmittelbar am Schneidkopf 30 ausgebildet sein.

Der Fügeabschnitt 31 hat eine grundkörperseitig offene, zentrische Aufnahmebohrung 32 mit zumindest abschnittsweise, im Besonderen an dem an den Boden der Aufnahmebohrung 32 angrenzenden Abschnitt, eine zylindrische Innenumfangsfläche 32a, die bezüglich der Drehachse 2 so gefertigt ist, dass eine sehr eng gesetzte Rundlauftoleranz eingehalten wird. Über die jeweils mit einer eng gesetzten Rundlauftoleranz gefertigten zylindrischen Längenabschnitte 32a, 22a der zentrischen Aufnahmebohrung 32 des Fügeabschnitts 40 und des Spannabschnitts 20 kann der Schneidkopf 30 mit einer eng definierten Spielpassung koaxial zur Drehachse 2 bzw. konzentrisch zu dem im Spannabschnitt 20 eingespannten Schneidwerkzeug 50 am Spannabschnitt 20 des Grundkörpers 11 positioniert werden.

Zur axialen Positionierung und Befestigung des Schneidkopfs 30 am Grundkörper 11 weist der Fügeabschnitt 31 außenumfangsseitig einen flanschartigen Radialvorsprung 33 auf, der grundkörperseitig eine Stirnfläche 33a hat, die an einer gegenüberliegenden Stirnfläche 14a einer Radialschulter 14 des Grundkörpers 11 anliegt. Die gegenüberliegenden Stirnflächen 33a, 14a am Schneidkopf 30 und Grundkörper 11 sind jeweils als plane, in einer radialen Ebene liegende Ringflächen ausgebildet. Der Schneidkopf 30 ist in der gezeigten Ausführungsform durch eine Vielzahl von äquidistant um die Drehachse 2 herum verteilten Spannschrauben 60 am Grundkörper 11 axial verschraubt. Die Spannschrauben 60 sind jeweils schneidkopfseitig in einer axialen Stufenbohrung 34 im Radialvorsprung 33 des Schneidkopfs 30 abgestützt und grundkörperseitig in eine gegenüberliegende Gewindebohrung 15 eingeschraubt, wie dies im Einzelnen aus Fig. 2 ersichtlich ist. Der Schneidkopf 30 ist dadurch drehfest, aber lösbar mit dem Grundkörper 11 verbunden.

Die axiale Tiefe der zentrischen Aufnahmebohrung 32 des Fügeabschnitts 31 ist geringfügig größer als die axiale Länge des Spannabschnitts 20 des Grundkörpers 11. Eine am Übergang von der zentrischen Aufnahmebohrung 32 im Fügeabschnitt 31 zu einer zentrischen Durchgangsbohrung 41 im Hülsenabschnitt 40 befindliche radiale Stirnfläche 42 liegt daher in einem geringen Abstand zur gegenüberliegenden Stirnfläche 23 des Spannabschnitts 20 des Grundkörpers 11. Der daraus resultierende Fügespalts zwischen den einander axial gegenüber liegenden Stirnflächen 23 und 42 erfolgt über eine O-Ring-Dichtung 46, die in einer an der Stirnfläche 23 des Spannabschnitts 20 eingearbeiteten Ringnut 47 angeordnet ist.

Alternativ oder zusätzlich zur Verschraubung des Schneidkopfs 30 am Grundkörper 11 über die Spannschrauben 60 kann der Schneidkopf 30 nach dem Vorbild des in der DE 10 2006 016 290 A1 beschriebenen Konzepts über den in den Spannabschnitt 20 integrierten Hydrodehnspannmechanismus 21 befestigt werden. Bei einer entsprechenden konstruktiven Gestaltung des Spannabschnitts 20 kann durch eine Druckbeaufschlagung der Druckkammer 21b des Hydrodehnspannmechanismus 21 erreicht werden, dass zum einen radial nach innen das in der zentrischen Aufnahmebohrung 21a aufgenommene Schneidwerkzeug 50 und zum anderen radial nach außen der auf dem Spannabschnitt 20 sitzende Schneidkopf 30 mit dem Grundkörper 11 synchron zu einem einstückig handhabbaren mehrstufigen Schaftwerkzeug 1 verspannt werden.

Wie in Fig. 2 dargestellt, weist der Hülsenabschnitt 40 eine zentrisch verlaufende Durchgangsbohrung 41 auf, die dank der konzentrischen Anordnung des Schneidkopfs 30 am Grundkörper 11 konzentrisch zur zentrischen Aufnahmebohrung 21a im Spannabschnitt 20 angeordnet ist und den aus dem Spannabschnitt 20 kragenden Werkzeugschaftteil des im Spannabschnitt 20 eingespannten Schneidwerkzeugs 50 mit einem definierten seitlichen Spiel umschließt, Durch den Hülsenabschnitt 40, der - in Werkzeugvorschubrichtung betrachtet - dem Spannabschnitt 20 vorgeschaltet ist, erhält der aus dem Spannabschnitt 20 kragende Werkzeugschafteil eine radiale Abstützung, die zu einer Verringerung von fliehkraft- oder einspannbedingten Abweichungen der Längsachse des Schneidwerkzeugs 50 von der Drehachse 2 des Werkzeughalters 1 beiträgt und damit Rundlauffehler verringert.

In der gezeigten Ausführungsform ist die zentrische Durchgangsbohrung 41 als eine Art Stufenbohrung ausgebildet, die lediglich an ihrem vom Grundkörper 11 abgewandten, vorderen Endabschnitt 41a über einen bestimmte Länge hinweg einen mit einer definierten Spielpassung gefertigten Innendurchmesser aufweist. Der zwischen diesem maßgeblichen Längenabschnitt 41a, dessen Innendurchmesser mit einer definierten Spielpassung gefertigt ist, und der zentrischen Aufnahmebohrung 21a des Spannabschnitts 20 befindliche Längenabschnitt 41b der zentrischen Durchgangsbohrung 41 des Hülsenabschnitts 40 hat einen geringfügig größeren Innendurchmesser als der maßgebliche Längenabschnitt 41a. Alternativ dazu kann die zentrischen Durchgangsbohrung 41 jedoch auch über ihre gesamte Länge hinweg einen mit einer definierten Spielpassung gefertigten Innendurchmesser haben, d. h. der maßgebliche Längenabschnitt kann sich über die gesamte Länge der zentrischen Durchgangsbohrung 41 erstrecken. In jedem Fall liegt der Innendurchmesser des maßgeblichen Längenabschnitts 41a der zentrischen Durchgangsbohrung 41 in einem eng tolerierten Toleranzfeld, um form- und/oder einspannbedingte Lageabweichungen zwischen der Längsachse des Schneidwerkzeugs 50 und der Drehachse 2 des Werkzeughalters 1 sowie fliehkraftbedingte Auslenkungen des Schneidwerkzeugs 50 gegenüber der Drehachse 2 zu verringern oder auszuschließen.

Um eine möglichst hohe Konzentrizität des das Schneidwerkzeug 50 radial positioniertenden, maßgeblichen Längenabschnitts 41a der Durchgangsbohrung 41 zur Drehachse 2 des Werkzeughalters 1 und damit zur Aufnahmebohrung 21a im Spannabschitt 20 zu erhalten, kann der Innendurchmesser dieses maßgeblichen Längenabschnitts 412a der Durchgangsbohrung 41 in einem Zustand, in dem der Schneidkopf 30 am Grundkörper 11 befestigt ist, mittels eines geeigneten Reib- oder Schleifwerkzeugs auf das für die enge Spielpassung erforderliche Toleranzmaß bearbeitet werden.

Wie sich aus Fig. 1 ergibt, ist der Schneidkopf 30 vom Radialvorsprung 33 weg in Richtung der Drehachse 2 zum Schneidwerkzeug 50 hin im Außendurchmesser stufenartig verjüngt ausgebildet. In der gezeigten Ausführungsform ist an dem vom Grundkörper 11 abgewandten, vorderen Endabschnitt des Hülsenabschnitts 40 des Weiteren eine Feinjustiereinrichtung 70 vorgesehen, die innerhalb des zur Verfügung stehendes Toleranzfeldes eine feinjustierbare Lagekorrektur des Schneidwerkzeugs 50 gestattet. Die Feinjustiereinrichtung 70 weist in der gezeigten Ausführungsform im Besonderen eine Vielzahl von Stellschrauben 71, im Besonderen Madenschrauben mit Innensechskant, auf, die an dem vom Spannabschnitt 20 abgewandten, vorderen Endabschnitt des Hülsenabschnitts 40 vorgesehen sind. In Fig. 2 sind zwei dieser Stellschrauben 71 gezeigt. Die Vielzahl von Stellschrauben 71, die um die Drehachse 2 des Werkzeughalters 10 herum äquidistant verteilt sind, sind jeweils in einer die Hülsenwand 42 des Hülsenabschnitts 40 durchdringenden Gewindebohrung 43 eingeschraubt und drücken mit ihrem Kopf jeweils radial gegen den aus dem Spannabschnitt 20 kragenden Werkzeugschafteil des Schneidwerkzeugs 50. Wie sich aus Fig. 1 ergibt, sieht die aus den Stellschrauben 71 gebildete Feinjustiereinrichtung 70 damit in einem definierten axialen Abstand von der Einspannstelle des Werkzeugschafts im Spannabschnitt 20 des Werkzeughalters 10 eine feinjustierbare Möglichkeit zur Korrektur der radialen Lage des aus dem Spannabschnitt 20 kragenden Werkzeugschaftteils des Schneidwerkzeugs 50 vor.

Der Werkzeughalter 2 bzw. das Schaftwerkzeug 1 haben ferner eine nicht näher beschriebene innenliegende MMS (Minimalmengenschmierung)-taugliche Kühlschmiermittelversorgungseinrichtung in Form einer an sich bekannten Kühlschmiermittelübergabeeinheit 80.

Der vorstehend beschriebene Aufbau ermöglicht es, aus den Bestandteilen Schneidwerkzeug 50, Schneidkopf 30 und Grundkörper 11 ein Schaftwerkzeug 1 modular aufzubauen, das sich durch eine hohe Rundlaufgenauigkeit der am Schneidwerkzeug 50 und am Schneidkopf 30 angeordneten Schneidkanten auszeichnet.

## Patentansprüche

1. Modularer Werkzeughalter (10) mit einem sich entlang einer Drehachse (2) erstreckenden Grundkörper (11), der funktional in einen Schaftabschnitt (12) zum Ankoppeln an eine Werkzeugmaschinenspindel und einen Spannabschnitt (20) mit einer zentrischen Aufnahmebohrung (21a) zum Aufnehmen und Spannen eines Schneidwerkzeugs (50), das wenigstens eine Schneidkante aufweist, unterteilt ist, und einem konzentrisch zum Grundkörper (11) angeordneten, am Grundkörper (11) lösbar befestigten Schneidkopf (30) mit wenigstens einer Schneidkante, die in einer vorbestimmten axialen und/oder radialen und/oder Winkellage zu der wenigstens einen Schneidkante des Schneidwerkzeugs (50) angeordnet ist, wobei
der Schneidkopf (30) einen den Werkzeughalter (10) verlängernden Hülsenabschnitt (40) mit einer konzentrisch zur zentrischen Aufnahmebohrung (21a) des Spannabschnitts (20) angeordneten zentrischen Durchgangsbohrung (41) zur Aufnahme und radialen Abstützung eines aus der zentrischen Aufnahmebohrung (21a) des Spannabschnitts (20) kragenden Werkzeugschaftteils des Schneidwerkzeugs (50) aufweist,
**dadurch gekennzeichnet, dass**
der Schneidkopf (30) in einem axialen Abstand zum Spannabschnitt (20) eine Feinjustiereinrichtung (70) zur Feinjustierung der radialen Lage des aus dem Spannabschnitt (20) kragenden Werkzeugschaftteils aufweist.

2. Werkzeughalter (10) nach Anspruch 1, **dadurch gekennzeichnet, dass** die zentrische Durchgangsbohrung (41) zumindest über einen bestimmten Längenabschnitt hinweg einen mit einer definierten Spielpassung gefertigten Innendurchmesser aufweist.

3. Werkzeughalter (10) nach Anspruch 1 oder 2, **dadurch gekennzeichnet, dass** die Feinjustiereinrichtung (70) eine Vielzahl von um die Drehachse (2) des Werkzeughalters (11) herum äquidistant angeordneten Stellschrauben (71) aufweist, die jeweils am Hülsenabschnitt (40) abgestützt sind und radial gegen den aus dem Spannabschnitt (20) kragenden Werkzeugschafteil drücken.

4. Werkzeughalter (10) nach einem der vorhergehenden Ansprüche, **dadurch gekennzeichnet, dass** der Schneidkopf (30) mit dem Grundkörper (11) verschraubt ist.

5. Werkzeughalter (10) nach einem der vorhergehende Ansprüche, **dadurch gekennzeichnet, dass** der Schneidkopf (30) über eine an seinem dem Grundkörper (11) zugewandten Endabschnitt vorgesehene Stirnfläche (33a) axial an einer gegenüberliegenden Stirnfläche (14a) des Grundkörpers (11) abgestützt ist.

6. Werkzeughalter (10) nach Anspruch 5, **dadurch gekennzeichnet, dass** die gegenüberliegenden Stirnflächen (33a, 14a) jeweils plane, in einer radialen Ebene liegende Ringflächen sind.

7. Werkzeughalter (10) nach einem der Ansprüche 4 bis 6, **dadurch gekennzeichnet, dass** der Schneidkopf (30) über eine Vielzahl von äquidistant um die Drehachse (2) des Werkzeughalters (10) herum verteilten Spannschrauben (60) mit dem Grundkörper (11) axial verschraubt ist.

8. Werkzeughalter (10) nach einem der vorhergehenden Ansprüche, **dadurch gekennzeichnet, dass** sich der Schneidkopf (30) im Außendurchmesser in Richtung der Drehachse (2) zum Schneidwerkzeug (50) hin verjüngt.

9. Werkzeughalter (10) nach einem der vorhergehenden Ansprüche, **gekennzeichnet durch** einen in den Spannabschnitt (20) integrierten Hydrodehnspannmechanismus (21) zum Spannen eines im Spannabschnitt (20) aufgenommenen Werkzeugschaftteils.

10. Werkzeughalter (10) nach einem der vorhergehenden Ansprüche, **dadurch gekennzeichnet, dass** der Schneidkopf (30) und/oder das Schneidwerkzeug (50) jeweils zumindest eine Schneidkante aufweisen/aufweist, die in ihrer axialen, radialen und/oder Winkellage relativ zur Drehachse (2) des Werkzeughalters (10) feinjustierbar ist.

11. Werkzeughalter (10) nach einem der vorhergehenden Ansprüche, **gekennzeichnet, durch** eine innenliegende Kühlschmiermittelversorgung (80).

12. Schaftwerkzeug (1), gebildet aus einem Werkzeughalter (10) nach einem der vorhergehenden Ansprüche, und einem im Werkzeughalter (10) gehaltenen Schneidwerkzeug (50).

## Claims

1. Modular tool holder (10) comprising a base body (11) extending along an axis of rotation (2), said base body being functionally divided into a shaft portion (12) for coupling to a machine tool spindle and into a clamping portion (20) having a central receiving bore (21a) for receiving and clamping a cutting tool (50), which has at least one cutting edge, and into a cutting head (30) arranged concentrically to the base body (11) and detachably fastened to the base body (11), having at least one cutting edge which is arranged in a predetermined axial and/or radial and/or angular position relative to the at least one cutting edge of the cutting tool (50), wherein
the cutting head (30) comprises a sleeve portion (40) extending the tool holder (10) having a central through bore (41) arranged concentrically to the central receiving bore (21a) of the clamping portion (20) for receiving and radially supporting a tool shank part of the cutting tool (50) projecting from the central receiving bore (21a) of the clamping portion (20),
**characterized in that**
the cutting head (30) has a vernier adjustment device (70) at an axial distance from the clamping portion (20) for vernier adjustment of the radial position of the tool shank part projecting from the clamping portion (20).

2. Tool holder (10) according to claim 1, **characterized in that** the central through bore (41) has an inner diameter manufactured with a defined clearance fit at least over a certain length section.

3. Tool holder (10) according to claim 1 or 2, **characterized in that** the vernier adjustment device (70) has a plurality of adjusting screws (71) arranged equidistantly around the axis of rotation (2) of the tool holder (11), which are each supported on the sleeve portion (40) and press radially against the tool shaft part projecting from the clamping portion (20).

4. Tool holder (10) according to one of the preceding claims, **characterized in that** the cutting head (30) is screwed to the base body (11).

5. Tool holder (10) according to one of the preceding claims, **characterized in that** the cutting head (30) is axially supported on an opposite end face (14a) of the base body (11) via an end face (33a) provided on the end portion of the cutting head (30) facing the base body (11).

6. Tool holder (10) according to claim 5, **characterized in that** the opposite end faces (33a, 14a) are each flat annular surfaces lying in a radial plane.

7. Tool holder (10) according to one of claims 4 to 6, **characterized in that** the cutting head (30) is axially screwed to the base body (11) via a plurality of clamping screws (60) distributed equidistantly around the axis of rotation (2) of the tool holder (10).

8. Tool holder (10) according to one of the preceding claims, **characterized in that** the cutting head (30) tapers in the outer diameter in the direction of the axis of rotation (2) towards the cutting tool (50).

9. Tool holder (10) according to one of the preceding claims, **characterized by** a hydraulic expansion clamping mechanism (21) integrated in the clamping portion (20) for clamping a tool shank part received in the clamping portion (20).

10. Tool holder (10) according to one of the preceding claims, **characterized in that** the cutting head (30) and/or the cutting tool (50) each has/have at least one cutting edge which is precisely adjustable in its axial, radial and/or angular position relative to the axis of rotation (2) of the tool holder (10).

11. Tool holder (10) according to one of the preceding claims, **characterized by** an internal cooling lubricant supply (80).

12. Shank tool (1) formed by a tool holder (10) according to one of the preceding claims and a cutting tool (50) held in the tool holder (10).

## Revendications

1. Porte-outil modulaire (10) muni d'un corps de base (11) s'étendant le long d'un axe de rotation (2), qui se divise de manière fonctionnelle en une portion de manche (12) destinée à être accouplée à une broche de machine-outil et une portion de serrage (20) munie d'un alésage central de logement (21a) destiné à loger et à serrer un outil de coupe (50) qui présente au moins un bord de coupe, est divisé, et une tête de coupe (30) agencée concentriquement au corps de base (11), fixée de manière amovible au corps de base (11), munie d'au moins un bord de coupe, qui est agencé dans une position axiale et/ou radiale et/ou angulaire prédéterminée par rapport à l'au moins un bord de coupe de l'outil de coupe (50), dans lequel
la tête de coupe (30) présente une portion de douille (40) prolongeant le porte-outil (10) munie d'un alésage de passage (41) central agencé concentriquement à l'alésage central de logement (21a) de la portion de serrage (20) servant de logement et d'appui radial à une portion de manche d'outil de l'outil de coupe (50) dépassant de l'alésage central de logement (21a) de la portion de serrage (20), **caractérisé en ce que**
la tête de coupe (30) présente, à une distance axiale de la portion de serrage (20), un appareil d'ajustement précis (70) destiné à l'ajustement précis de la position radiale de la portion de manche d'outil dépassant de la portion de serrage (20).

2. Porte-outil (10) selon la revendication 1, **caractérisé en ce que** l'alésage de passage (41) central présente au moins un diamètre intérieur fabriqué avec un ajustement de jeu défini sur une portion de longueur déterminée.

3. Porte-outil (10) selon la revendication 1 ou 2, **caractérisé en ce que** l'appareil d'ajustement précis (70) présente une pluralité de vis de réglages (71) agencées de manière équidistante autour de l'axe de rotation (2) du porte-outil (11), lesquelles sont respectivement en appui sur la portion de douille (40) et pressent de manière radiale contre la portion de manche d'outil dépassant de la portion de serrage (20).

4. Porte-outil (10) selon l'une quelconque des revendications précédentes, **caractérisé en ce que** la tête de coupe (30) est vissée au corps de base (11).

5. Porte-outil (10) selon l'une quelconque des revendications précédentes, **caractérisé en ce que** la tête de coupe (30) est en appui sur une surface frontale (33a) prévue au niveau de sa portion d'extrémité orientée vers le corps de base (11), de manière axiale à une surface frontale opposée (14a) du corps de base (11).

6. Porte-outil (10) selon la revendication 5, **caractérisé en ce que** les surfaces frontales opposées (33a, 14a) sont respectivement planes dans une surface annulaire se trouvant dans un plan radial.

7. Porte-outil (10) selon l'une quelconque des revendications 4 à 6, **caractérisé en ce que** la tête de coupe (30) est vissée de manière axiale au corps de base (11) par l'intermédiaire d'une pluralité de vis de serrage (60) réparties de manière équidistante autour de l'axe de rotation (2) du porte-outil (10).

8. Porte-outil (10) selon l'une quelconque des revendications précédentes, **caractérisé en ce que** la tête de coupe (30) se rétrécit en termes de diamètre extérieur dans la direction de l'axe de rotation (2) jusqu'à l'outil de coupe (50).

9. Porte-outil (10) selon l'une quelconque des revendications précédentes, **caractérisé par** un mécanisme de serrage-étirage hydraulique (21) intégré dans la portion de serrage (20) destiné au serrage d'une portion de manche d'outil logée dans une portion de serrage (20).

10. Porte-outil (10) selon l'une quelconque des revendications précédentes, **caractérisé en ce que** la tête de coupe (30) et/ou l'outil de coupe (50) présente/présentent respectivement au moins un bord de coupe qui peut être ajusté de manière précise dans sa position axiale, radiale et/ou angulaire par rapport à l'axe de rotation (2) du porte-outil (10).

11. Porte-outil (10) selon l'une quelconque des revendications précédentes, **caractérisé par** une alimentation interne en lubrifiant réfrigérant (80).

12. Outil à manche (1), formé à partir d'un porte-outil (10) selon l'une quelconque des revendications précédentes, et à partir d'un outil de coupe (50) maintenu dans le porte-outil (10).
